# EUROPEAN PATENT SPECIFICATION

(11) **EP 3 326 393 B1**
(45) Date of publication and mention of the grant of the patent: **29.09.2021**
(21) Application number: 16826970.2
(22) Date of filing: 21.07.2016
(51) Int. Cl.: H04W 4/00, A01M 23/00, H04W 74/06

(54) **A PEST CONTROL MONITORING SYSTEM**
SCHÄDLINGSBEKÄMPFUNGSÜBERWACHUNGSSYSTEM
SYSTÈME DE SURVEILLANCE ET DE LUTTE ANTIPARASITAIRE

(30) Priority: 21.07.2015 US 201562195210 P
(43) Date of publication of application: 30.05.2018
(73) Proprietor: Smart Wave Technologies, Inc., Schaumburg, IL 60173 (US)
(72) Inventor: ZOSIMADIS, Peter, Toronto, Ontario M9A 1W4 (CA)
(74) Representative: Kuhnen & Wacker Patent- und Rechtsanwaltsbüro PartG mbB
(86) International application number: PCT/CA2016/050860
(87) International publication number: WO 2017/011916

(56) References cited:
- EP-A1- 1 489 904
- GB-A- 2 472 124
- KR-A- 20140 119 926
- US-A1- 2009 192 763
- US-A1- 2009 193 707
- US-A1- 2013 342 344
- US-A1- 2014 300 477

## Description

### FIELD OF THE INVENTION

The technology relates to a pest (e.g. rodent) control monitoring system for determining and identifying which of the multiple pest traps within a range of a portable electronic device have been activated.

### BACKGROUND OF THE INVENTION

Operating and maintaining pest (e.g. rodent) control technology may require significant labor, with most of the costs in controlling pest populations incurred from monitoring traps. In a typical pest control system, multiple traps are positioned in and around a facility, with a typical facility having 50 or more traps. Workers are employed to check the traps periodically (e.g. weekly or monthly) to remove the trapped pests and reset the traps. This can be time-consuming, since workers must locate, inspect and document the status of each trap within a facility. In addition, traps are often placed in inconvenient and hard to reach places, requiring workers to bend, crawl or lie prone to gain access to the traps. Often, there are no pests in the traps, or even in the facility, yet costs are incurred for checking the traps. Accordingly, there is a need for an inexpensive pest control system that is less labor intensive. The preamble of claim 1 is based on EP 1 489 904.

### SUMMARY OF THE INVENTION

In accordance with a first aspect, there is provided a rodent trapping system according to claim 1, method according to claim 14 and a computer program according to claim 15. Other preferred embodiments are presented in the dependent claims.

By allowing the traps to interact directly with the portable electronic device, the complexity of the pest control system may be reduced compared with more complex arrangements where traps automatically send data over a network (e.g. the internet) to remote monitoring locations. This may lower the costs of the trap system.

A trap may be activated to detect a pest (e.g. rodent). For example, in a bait trap, the trap may be configured to detect the presence of the pest by detecting the vibration of the pest in the trap and/or the diminishing mass of bait. This allows the users to determine how many pests have been killed and/or the required frequency of replenishing bait.

A trap may be activated to trap a pest. For example, a live capture trap may capture but not kill the pest. For example, the trap may be a glue strip trap.

A trap may be activated to kill the pest. For example, a spring-loaded mousetrap may be configured to active the jaws to capture and kill a rodent.

That is, a trap being activated may be considered to encompass one or more of the following: detecting that the pest was present but is now gone; detecting that the pest has been captured (dead or alive); detecting that the trap mechanism was triggered; and detecting that the pest has consumed bait.

It will be appreciated that in order to identify a trap, the portable electronic device must be able to distinguish the trap from other traps in range.

It will be appreciated that other traps may be configured to detect, trap or kill pests other than rodents (e.g. insects such as cockroaches or flies).

A rodent may comprise, for example, a rat, a mouse, or a squirrel.

The local wireless communications signals may be transmitted using Short-Range Wireless Technology. The range of the portable electronic device and the traps would typically be less than a 100 meters. The range of the portable electronic device and traps may be less than 10 meters. This may prevent interference from other short-range devices in the area. By using local wireless communications signals (which are detectable only within a short range) the portable electronic device may be better able to distinguish between traps within range based on, for example, the angle of incidence of the received local wireless communications signals. The range may be anisotropic. For example, a receiver (e.g. a directional antenna) may be able to receive signals from farther away in one direction than another. Restricting the range of angles from which the portable electronic device received local wireless communications signals may improve identification of the trap and/or reduce power consumption of the portable electronic device.

The range may extend a predetermined distance from the portable electronic device. The predetermined distance may be, for example, between 20-30 feet (6-9 meters). The range may be related to the transmitting power of the traps. For example, some of the multiple traps may be able to transmit local wireless communications signals farther than others.

### Trap Configuration

The trap may comprise a jaw trap, a spring-loaded bar trap, an electric trap, or a cage trap. At least one of the traps may comprise a live-capture (non-lethal) trap. At least one of the traps may be configured to kill the trapped pest (e.g. rodent). At least one of the traps may be a bait station in which a pest is offered a bait to consume. At least one of the traps may comprise a glue trap (e.g. comprising sticky tape).

The pest traps comprises a transmitter (e.g. an antenna) for transmitting the local wireless communications signals.

A trap may comprise an activation member configured, when the trap is activated, to move from a first primed position to a second activated position in order to trap the pest. For example, in the case of the jaw trap, the first primed position is when the jaw (the activation member in this case) is open. When the trap is activated the jaw moves from the open primed position to a closed activated position in order to trap the pest.

A trap may comprise a trigger configured to initiate movement of the activation member from the first primed position to a second activated position. For example, in a spring-loaded bar trap a trigger mechanism is configured to restrain the spring-loaded bar in a primed position until movement of the trigger releases the spring-loaded bar.

A trap may comprise an activation member configured, after the trap is activated, to return from the second activated position to the first primed position. This may allow further pests to be trapped by the trap. For example, the activation member of a cage trap may comprise a trapdoor configured to be biased shut (e.g. by means of a biasing member such as a spring or a counter weight). In this case, the first primed position is when the trapdoor is open and the second activated position is when the door is closed. In response to a first pest standing on the primed closed trapdoor the door is configured to open and deposit the first pest into a chamber. The trapdoor activation member is then configured to return to the primed position as the trapdoor biases shut (thereby trapping the pest in the chamber). When a subsequent pest (e.g. rodent) stands on the primed closed trapdoor, it too can be deposited into the chamber.

It will be appreciated that some traps may not have an activation member. For example, an electronic pest trap may be activated by applying a voltage to electrodes to electrocute the pest.

Each of the pest traps may comprise an activation sensor, configured to determine when the pest trap is or has been activated. The activation sensor may comprise one or more of: a vibration sensor; an optical sensor, an audio sensor, an infrared sensor; a disturbance switch, a tilt switch, a micro-switch, a proximity sensor, and a switch (e.g. a magnetic switch).

The activation sensor may be configured to determine when an activation member of the trap is or has been activated from a primed configuration to an activated configuration.

The activation sensor may be configured to track time, quantity of pests, frequency, and length of stay of pests within the trap.

The activation sensor may be configured to determine whether or not a pest is present in the trap. For example, the activation sensor may comprise an infrared sensor configured to detect the heat of the pest in the trap. The activation sensor may comprise a retro-reflector configured to detect the presence of an object in the trap by measuring a change in the amount of light reflected from the retro-reflector. The presence of a pest may be determined when the pest blocks a beam of light transmitted from a light source to a light sensor (e.g. via a retro-reflector).

A trap comprises a controller. A trap controller may be configured to process the sensor data and control transmission of the local wireless communications signals.

A trap may be configured to generate an activation time associated with an activation event of an activated trap. A trap may be configured to generate a pest-event time associated with a pest event. A pest event may include a pest entering the trap and/or a pest eating bait. A pest may be detected entering a trap using a sensor such as an IR sensor, a vibrations sensor or a motion sensor. Bait depletion may be detected by measuring the mass or weight of the bait (e.g. and comparing it before and after detecting the presence of a pest in the trap). A pest event may or may not be an activation event.

By recording pest events, data associated with pest activity may be recorded independently of activation events. For example, pest event data may include, for example, three mice fed on Monday at 2am, 3am and 8am respectively at trap 1. It may also be possible to aggregate pest event data from multiple traps (e.g. at 3am, traps 1, 2, 5, 7, 8 all registered pest activity). This may allow a facility to improve procedures both in setting the traps, and also to prevent pest infestation by, for example, controlling access to the building. That is, the latter example may indicate that doors being opened for an early morning delivery are allowing pests to enter a building and enter the traps by 3am. Staff could be reminded to keep the doors closed as much as possible during deliveries. The trap may be configured to transmit this pest-event data (e.g. to the portable electronic device or other remote device).

A trap may be configured to determine which type pest visited the trap, helps the ability to treat the facility more effectively. For example, the apparatus may comprise a heat sensor configured to determine the amount of heat generated by a pest in the trap and thereby estimate its size. The trap may be configured to transmit this pest-type data (e.g. to the portable electronic device or other remote device).

A trap may be configured to determine whether the trap has been manually opened (e.g. for inspection). This may be determined using the activation sensor and/or a separate sensor (e.g. a microswitch). In pharmaceutical plants, the pest inspector is required to physically open each trap as part of their inspection. Logging this information allows a record of their inspection to be kept (e.g. for independent checking). The trap may be configured to transmit this opening data (e.g. to the portable electronic device or other remote device).

The trap may have one or more condition sensors comprising at least one of: a temperature sensor (e.g. a thermocouple or other thermometer); and a humidity sensor. The trap may be configured to transmit recorded condition data such as temperature and/or humidity data (e.g. to the portable electronic device or other remote device). The condition sensor may be configured to measure the condition of the bait directly and/or the environment around the bait (e.g. the humidity within the chamber of a box trap). High humidity and/or temperature may cause bait to go off quickly (e.g. by encouraging the faster growth of molds). By tracking humidity and/or temperature, the lifespan of the bait may be determined (e.g. by the trap, by the portable electronic device or by another remote device). The transmitted data may comprise a sequence of one or more temperature and/or humidity values (e.g. maximum temperature, maximum humidity, or the temperature and/or humidity at a particular time); and/or an indication that the recorded temperature and/or humidity satisfies one or more criteria (e.g. the humidity has exceeded a predetermined humidity threshold for a predetermined period of time). In this way, the indication may indicate whether the bait is likely to have gone off.

This may save operator time and ensure that the traps stay effective longer. It will be appreciated that other traps may be configured to control the humidity and/or temperature based on the recorded data. For example, the trap may comprise a conditioning unit comprising one or more of: a humidifier; a dehumidifier; a heater and a cooler. The conditioning unit may be controlled by a controller in response to the recorded data.

It will be appreciated that an existing conventional pest control trap may be converted for use with the present system using a retrofittable activation-detection module.

The activation-detection module may comprise:
a connector, the connector configured to connect the activation-detection module to the pest control trap ;
a sensor, the sensor connected to a controller and configured to sense when the pest control trap has been activated; and
a transmitter, the transmitter connected to the controller and configured to transmit data relating to the activation of the pest control trap.

The connector may comprise a mechanical connection to physically connect the activation-detection module to the pest control trap. For example, the connector may comprise: a layer of adhesive; a clip; screws; or a tie (e.g. a cable tie). In this way it will be possible retrofit (i.e. stick the module on the side / top of the existing trap) an existing trap with a module which embodies similar technology (activating switch, controller, radio, etc.). For example, if the activating switch was a vibration sensor, we could configure the device to detect when the trap is activated or a pest (e.g. a rodent) has visited by the vibration signature produced by the pest inside the trap.

### Portable Electronic Device Configuration

The portable electronic device comprises a receiver (e.g. an antenna) for receiving local wireless communications signals.

The portable electronic device comprises a controller configured to process the received local wireless communications signals. A controller comprises a processor (e.g. a central processing unit, a microprocessor, an application-specific integrated circuit or ASIC or a multicore processor). The controller comprises a memory (e.g. flash memory, a hard-drive, volatile memory). The controller is configured to run computer program code configured to allow the controller to process the received local wireless communications signals in order to identify at least one of the multiple traps in range which have been activated, the portable electronic device being configured to based on the received local wireless communications signals, to determine the relative location of at least one of the identified activated traps and to provide an indication to the user of the determined relative location, the determined relative location comprising information relating to one or more of: the proximity of the trap to the portable electronic device; and the direction of the trap relative to the portable electronic device.

The indication may comprise one or more of: an audio indication; a tactile indication; and a visual indication.

The portable electronic device is configured, in response to the received local wireless communications signals, to determine and identify one or more traps in range which have not been activated. It will be appreciated that this may allow the status of traps to be recorded whether they are activated or not. This may be advantageous to maintain statistics of trap success and/or to identify traps which are no longer able to transmit wireless communications signals.

The portable electronic device may be configured to provide a broadcast signal to any traps within the range in order to prompt transmission of the local wireless communications signals from the traps within range. By prompting transmission of the local wireless communications signals, the energy consumption of the trap transmitter may be reduced.

The portable electronic device may be configured, based on the received local wireless communications signals, to record an activation time associated with an activation event of an activated trap. The activation time may correspond to the time the trap was activated and be generated by the trap. That is, the trap may be configured to record a time associated with the activation of the trap and transmit the recorded time to the portable electronic device (e.g. via local wireless communications signals). The activation time may correspond to the time that the activation was recorded by the portable electronic device. That is, the portable electronic device may be configured to record the time that it receives local wireless communications signals from the trap. It will be appreciated that configuring the portable electronic device to generate and record the activation time may allow the complexity of the traps to be reduced. It will be appreciated that configuring the traps to generate the activation time may be more accurate as the trap-generated activation time may more closely correspond with the actual time that the trap was activated.

The portable electronic device may be configured, based on the received local wireless communications signals, to record which traps were activated and/or which traps were not activated. The portable electronic device may comprise memory configured to store the recorded data.

The portable electronic device may be configured to identify the at least one of the multiple traps in range based on the location of the trap.

The portable electronic device may be configured to identify the at least one of the multiple traps in range based on the angle of incidence of the local wireless communication signals. For example, the portable electronic device may be configured to determine whether the trap is in front of or behind the portable electronic device. The portable electronic device may comprise a phased-array antenna configured to determine the angle of incidence of the local wireless communication signals.

The portable electronic device may be configured to identify the at least one of the multiple traps in range based on the proximity of the traps. The portable electronic device may be configured to measure the signal strength of the received local wireless communication signals in order to estimate the proximity of the corresponding trap.

The portable electronic device may be configured to identify the at least one of the multiple traps in range based on information encoded in the local wireless communication signals. For example, the wireless communication signals themselves may comprise identifying signatures, each identifying signature corresponding to a respective trap.

The portable electronic device may be configured, based on the received local wireless communications signals, to determine the location of at least one of the identified activated traps; and provide an indication to the user of the determined location.

The determined location may comprise information relating to one or more of: the proximity of the trap to the portable electronic device; the direction of the trap relative to the portable electronic device; and the absolute position of the trap. The portable electronic device may be configured to determine the proximity of the trap by measuring the signal strength of the corresponding local wireless communication signals. The portable electronic device may be configured to determine the direction of a trap using a phased-array antenna. The trap may be configured to transmit information relating to the absolute position of the trap via the local wireless communication signaling.

The portable electronic device may comprise one or more of: a handheld device; a smartphone; a laptop; a tablet computer; a cellphone; and a personal digital assistant.

The local wireless communication signals may comprise one or more of: short-range radio frequency signals, Bluetooth®, Wi-Fi, optical signals, infrared signals, and ISM frequency signals. The portable electronic device and/or the trap may comprise a low-power transmitter. A low power radio frequency transmitter may have a maximum output of less than between 25-100 mW effective radiated power (ERP).

### Data Processing

The portable electronic device may be configured to enable provision of data to an external electronic device (e.g. a central remote server or remote computer), the data comprising one or more of: information on which of the multiple traps had been activated; an activation time associated with one or more traps; location data associated with one or more traps; and inspection time information associated with when the inspection was performed.

It will be appreciated that it may be advantageous to maintain records of the traps which have been activated. These records may include the number of traps which have been activated; the ratio of the number of traps which have been activated to the number of traps which have not been activated; the frequency of trap activation; the times of trap activation; the location of traps; and the frequency of trap activation.

### BRIEF DESCRIPTION OF THE DRAWINGS

The invention is described with reference to the accompanying figures in which:
**Figure 1a** is an overhead view of a facility in which a rodent control agent is using a portable electronic device to inspect three rodent traps located within the facility;
**Figure 1b** is a schematic showing the interaction between the portable electronic device and the traps within range;
**Figure 2a** is an overhead view of a facility in which a rodent control agent is using a portable electronic device to inspect ten rodent traps located within the facility;
**Figure 2b** is a schematic showing the interaction between the portable electronic device and the traps within range;
**Figure 3** is a schematic showing the components of a pest control system and how they interact; and
**Figure 4** is a schematic showing the interaction between the portable electronic device and a pest control trap.

### DETAILED DESCRIPTION OF THE INVENTION

Pests such as rodents or insects can be a significant problem in a wide range of locations, climates and situations. For example, it is known that rodents have been a problem to humans for thousands of years and that they have generally followed humans wherever humans have settled around the world. The problems that rodents can cause are varied. For example, in addition to the damage that they can cause by eating foodstuffs, they may also contaminate foodstuffs which they don't eat (e.g. with saliva, faeces and/or urine). Rodents may also cause damage to the fabric of a building by, for example, chewing wiring or nesting within wall cavities. In addition, rodents may harbor and transmit a number of diseases. They may also carry parasites, such as fleas and ticks. Rodent populations can also grow quickly. As a result, effective and timely action to prevent or deal with a rodent infestation is important. Throughout human history, humans have devised many solutions to controlling or reducing rodent populations and there are presently thousands of businesses whose primary services are the control/reduction of rodents.

In a typical modern rodent control system, multiple traps are located around a facility (e.g. a warehouse, a farm, a home or an office block). Depending on the climate, environment or situation, facilities may commonly have fifty or more traps. Rodent control agents are employed to manually check these traps periodically (e.g. weekly or monthly). In order to manually check the traps, the rodent control agents must locate the traps (by finding them or knowing where they are) and inspect the traps (e.g. visually) to determine whether they have been activated.

Some rodents, such as rats, are instinctively wary of things new to their environment, including control measures such as traps and bait. Manually inspecting a trap may impart a new smell onto the trap and/or change the position of the trap which may lead to the rodents avoiding the trap and thereby reducing trap efficacy. In addition, rodents may also colonize in attics, burrows, under concrete and porches, in wall voids and other hard-to-reach places. These factors make manual inspection of the traps undesirable for the rodent control agent.

It therefore may be advantageous to allow the rodent control agent to determine remotely when a trap has been activated when they are inspecting a facility. This may reduce the labour required to inspect a facility and reduce the need to disturb the traps.

The present invention relates to a portable electronic device configured to receive local wireless communications signals from one or more traps within a range, the rodent traps being configured to activate in order to trap a rodent, wherein the portable electronic device is configured, in response to the received local wireless communications signals: to identify at least one of the multiple traps in range which have been activated; and to provide an indication to a user of the at least one identified activated traps. Allowing the user to determine whether the traps have been activated remotely mitigates the need for a manual or visual inspection.

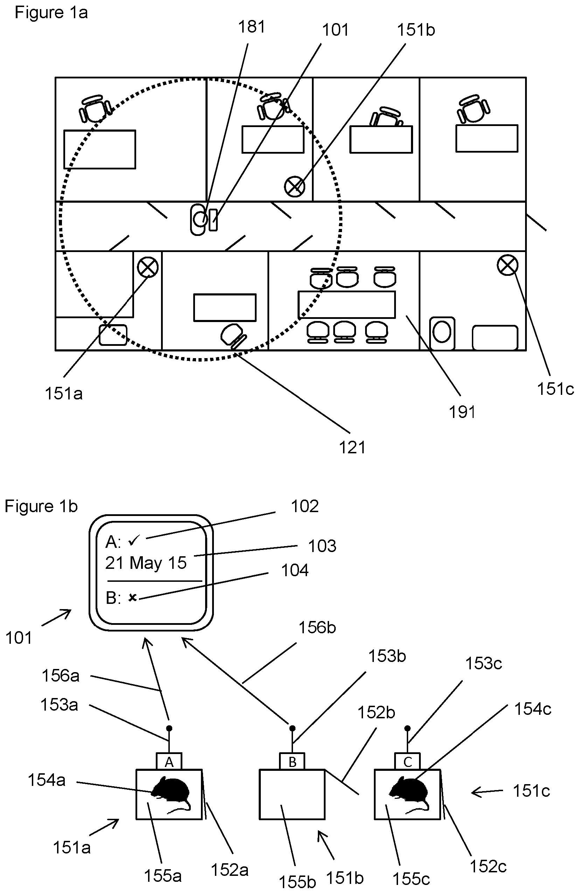

Figures 1a-1b, show a first embodiment of a portable electronic device 101 which, in this case, is a custom built device being used by a rodent control agent (the user 181) to determine whether any of the traps 151a-c within a range 121 have been activated.

Figure 1a is a plan view of a facility 191, in this case an office. It will be appreciated that this and other embodiments of the portable electronic device may be used in other facilities such as warehouses, farms, storage buildings, granaries, shops, trucks, kitchens or houses.

In this case, the office has been supplied with three rodent traps 151a-c placed at various locations within the office facility 191. The rodent control agent user 181 is inspecting the various traps within the office facility 191 using a portable electronic device 101. In this case, the portable electronic device 101 is configured to receive local wireless communications signals from multiple rodent traps within a range 121, the rodent traps being configured to activate in order to trap a rodent, wherein the portable electronic device 101 is configured, in response to the received local wireless communications signals: to identify at least one of the multiple traps 151a-c in range 121 which have been activated; and to provide an indication 102 to a user of the at least one identified activated traps 151a.

As the user passes through the office facility 191, one or more traps move into the range 121 of the portable electronic device. In the situation shown in figures 1a and 1b, two traps 151a-b are within range and one trap 151c is out of range. It will be appreciated that as the portable electronic device is moved through the facility traps which previously were out of range may come within range thereby enabling the portable electronic device to interact with them.

In this case, the portable electronic device comprises a short-range radio frequency transceiver with a range of about 20 feet (6 meters). The transceiver is configured to provide a broadcast signal to any rodent traps within the range 121 in order to prompt transmission of the local wireless communications signals 156a-b from the rodent traps within range. To enable transmission of the local wireless communications signals, each trap comprises a transmitter 153a-c configured to transmit short-range radio frequency local wireless communication signals.

It will be appreciated that each transmitter 153a-c may form part of an activation-detection module, the activation-detection module comprising: a connector, the connector configured to connect the activation-detection module to the pest control trap; a sensor, the sensor connected to a controller and configured to sense when the pest control trap has been activated; and a transmitter, the transmitter connected to the controller and configured to transmit data relating to the activation of the pest control trap. The module may have a small form factor (e.g. 2,54 cm diameter module).

By prompting transmission of the local wireless communications signals 156a-b, the energy consumption of the trap transmitter may be reduced as the trap transmitter need only be active when an appropriately configured portable electronic device is within range. In addition, the trap transmitter may reduce power consumption by transmitting the local wireless communication signals in a narrow beam directed towards the portable electronic device (e.g. a unicast transmission) rather than transmitting broadcast local wireless communications signals. The local wireless communications signals, in this case, also comprise short-range radio frequency signals.

Figure 1b shows the interaction between the traps 151a-c and the portable electronic device 101.

In this case, each of the rodent traps 151a-c comprises a non-lethal trap. The non-lethal traps 151a-c each comprises a chamber 155a-c with an activation member 152a-c, which in this case is a spring-loaded door. The spring-loaded door is configured to move from a first primed position (in this case, when the spring-loaded door is open) to a second activated position (in this case, when the spring-loaded door is closed) in order to trap a rodent 154a, 154c.

The spring-loaded door activation member 152a-c is controlled, in this case, by a trigger (not shown) configured to initiate movement of the activation member from the first primed position to a second activated position. In this case, the trigger comprises an infrared trigger sensor configured to determine when a rodent is in the chamber by detecting the rodent's body heat. It will be appreciated that other sensors may be used to detect the presence of a rodent such as one or more of: a vibration sensor; and an optical sensor. In this case, when the sensor detects a rodent in the chamber it sends a signal (e.g. wired or wireless signal) to a trap controller which, in response to receiving the trigger signal, enables release of the spring-loaded door from the primed position to the activated closed position thereby trapping the rodent in the chamber. In other embodiments, the trigger may comprise a mechanical trigger.

The trigger sensor, in this case, also serves as an activation sensor configured to determine when the trap is activated. That is, the trigger sensor also sends a signal to the trap controller indicating that the trap has been activated. It will be appreciated that in some embodiments, the trap may comprise a first sensor configured to activate the trap, and a second distinct sensor configured to determine whether the trap has been activated.

In this case, the trap controller is configured, in response to receiving the activation sensor signal and the prompt signal from the portable electronic device, to enable transmission by the transmitter 153a-c of an activated local wireless communications signal. In this case, the trap controller is also configured, in response to receiving the prompt signal from the portable electronic device when an activation sensor signal has not been received, to enable transmission by the transmitter 153a-c of an unactivated local wireless communications signal (i.e. a signal that comprises information relating to the unactivated state of the trap).

In the case shown in figures 1a-1b, one of the rodent traps 151a within range has been activated and one of the rodent traps 151b within range has not been activated.

In this embodiment, the portable electronic device is configured to receive local wireless communications signaling from traps within range which have been activated and traps which have not been activated. In this case, the portable electronic device comprises a processor and a memory which is configured to identify each of the traps in range based on information encoded in the local wireless communication signals. That is, each of the traps are configured to transmit local wireless communication signals comprising identification information as well as information relating to whether the trap has been activated.

In this case, the portable electronic device controller is configured to determine whether the received local wireless communications signals includes an activated or an unactivated signal to determine whether or not the trap has been activated.

In this case the portable electronic device controller 101 provides a visual indication of the trap-status information to the user in the form of a table displayed on a screen with each trap within range being identified on the screen by a letter (trap 151a corresponding to the letter 'A', and trap 151b corresponding to the letter 'B'); and an associated tick 102 indicating that the trap has been activated or a cross 105 indicating that the trap has not been activated.

In addition, the portable electronic device is configured to receive and process activation time information from the activated rodent traps. In this case, the rodent trap controllers are configured to record the date that the trap was activated and transmit this information to the portable electronic device via the local wireless communication signals. This information is decoded by the portable electronic device 101 and displayed on screen 103.

This activation time information may be useful in determining a strategy for placing and/or inspecting the traps within a facility. In this case the portable electronic is configured to enable provision of data to an external electronic device, the data comprising information on which of the multiple traps had been activated. The provision of data may be enabled by transmitting information wirelessly (e.g. via Wi-Fi, Bluetooth®) and/or by storing information locally on the portable electronic device for later retrieval (using, for example, a USB stick, or a wired or wireless connection).

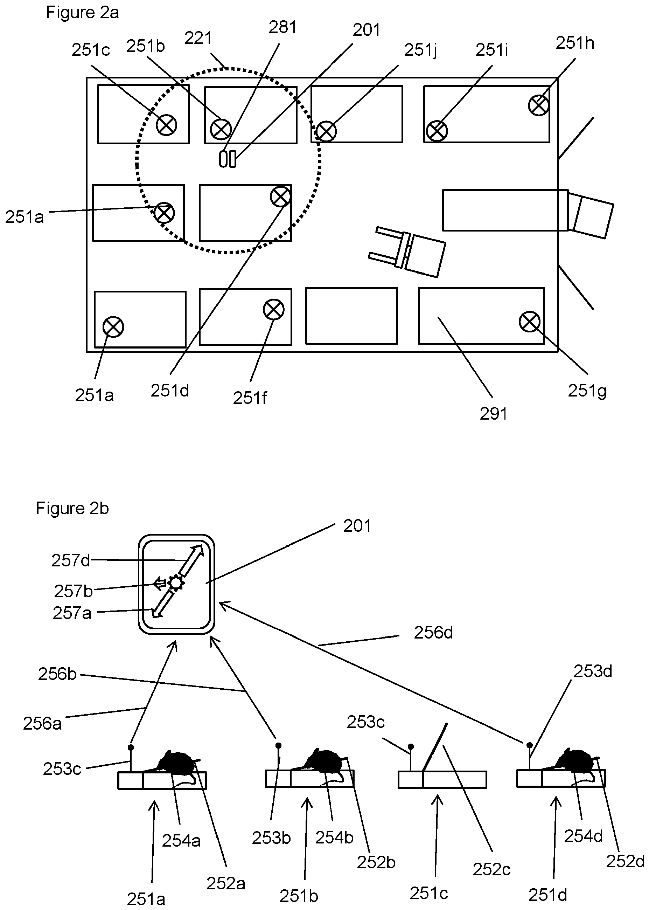

Figures 2a-2b, show a second embodiment of a portable electronic device which, in this case, is a tablet computer being used by a rodent control agent to determine whether a number of traps have been activated.

Figure 2a is a plan view of a facility, in this case a warehouse storing cattle feedstuffs stored on pallets.

In this case, the warehouse has been supplied with ten rodent traps placed at various locations within the warehouse facility. The rodent control agent 281 user is inspecting the various traps 251a-j within the office facility using a portable electronic device 201. It will be appreciated that traps in a warehouse may be difficult to locate as they may be stored within the pallets or high up and out of reach. In this case, the portable electronic device is configured to receive local wireless communications signals 256a,b,d from multiple rodent traps within a range, the rodent traps being configured to activate in order to trap a rodent, wherein the portable electronic device is configured, in response to the received local wireless communications signals: to identify at least one of the multiple traps in range 221 which have been activated; and to provide an indication 256a-d to a user of the at least one identified activated traps.

As the rodent control agent user 281 passes through the warehouse facility 291, one or more traps move into the range of the portable electronic device. In the situation shown in figures 2a and 2b, four traps 251a-d are within range and six traps 251e-j are out of range. It will be appreciated that as the portable electronic device is moved through the facility traps which previously were out of range may come within range thereby enabling the portable electronic device to interact with them.

In this case, the portable electronic device 201 comprises a short-range radio frequency receiver. The receiver is configured to receive local wireless communication signal broadcasts from the traps. Unlike the previous embodiment, the traps in this case are configured to transmit broadcast wireless communication signals 256a,b,d when they have been activated. Traps which have not been activated are configured not to transmit broadcast wireless communication signals. By only transmitting local wireless communications signals when the trap has been activated, the energy consumption of the trap transmitter may be reduced.

Figure 2b shows the interaction between the traps and the portable electronic device.

In this case, each of the rodent traps 251a-j is configured to kill the rodent 254a,b,d. In this case the rodent traps 251a-j each comprises a spring-loaded bar trap. In this case the activation member 252a-d is a spring-loaded bar.

The spring-loaded door activation member is controlled, in this case, by a trigger configured to initiate movement of the activation member 252a-d from the first primed position to a second activated position. In this case, the trigger comprises mechanical trigger mechanism configured to hold the spring-loaded bar 252a-d in the primed position. When the rodent moves the mechanical trigger mechanism (e.g. by moving bait attached to the mechanical trigger mechanism), the spring-loaded bar 252a-d is released to move from the open primed position to the closed activated position.

Each trap in this case also comprises an activation sensor which, in this case, is a micro-switch configured to be turned on when the spring-loaded bar activation member 252a-d is in the closed activated position. When the activation sensor is activated the trap is configured to broadcast local wireless communication signals via a transmitter 253a-d.

In this embodiment, the portable electronic device 201 is configured to receive local wireless communications 256a,b,d signaling from traps within range which have been activated. In this case, the portable electronic device is configured to identify the at least one of the multiple traps in range based on the angle of incidence of the local wireless communication signals. That is, in this embodiment, the local wireless communication signaling provided by the various activated traps are the same. However, the portable electronic device 201 is in this case configured to identify and distinguish between the traps based on the location of the traps. In order to do this, the portable electronic device comprises a phased-array antenna configured to measure the angle of incidence of the incoming local wireless communications signaling for each of the activated traps. It will be appreciated that by configuring the portable electronic device to distinguish between the traps based on the angle of incidence of the local wireless communication signaling, traps may be mass produced to transmit the same activation signaling because it mitigates the need for the traps to transmit identifying signals.

In this case the portable electronic device 201 provides the information to the user visually in the form of an arrow indication 257a,b,d, each arrow indication indicating the location of an activated trap 251a,b,d relative to the portable electronic device (and to the user). It will be appreciated that other indications may be used to indicate the relative or absolute position of a trap. The angle of the arrow indication 257a,b,d indicates the direction to the corresponding activated trap and the length of the arrow indication 257a,b,d indicates the proximity of the corresponding activated trap (short arrows indicate a close proximity and long arrows indicate that a trap is farther away). It will be appreciated that by providing a location indication, the user does not need to know beforehand where the traps have been positioned. This may be particularly useful where the traps may be moved with time (e.g. a trap located in a pallet being moved with the pallet) or where there is no set location for trap (e.g. a rodent control agent inspecting traps in trucks transporting foodstuffs long-distance).

In addition, in this case, the portable electronic device is configured generate activation time information associated with the activated rodent traps. In this case, the portable electronic device is configured to record the number of activated traps in a particular facility for a given inspection. This activation time information may be useful in determining a strategy for placing and/or inspecting the traps within a facility. In this case the portable electronic is configured to enable provision of data to an external electronic device, the data comprising information on which of the multiple traps had been activated. The provision of data may be enabled by transmitting information wirelessly (e.g. via Wi-Fi, Bluetooth®) and/or by storing information locally on the portable electronic device for later retrieval (using, for example, a USB stick, or a wired or wireless connection).

It will be appreciated that in other embodiments, one or more of the traps may have one or more condition sensors comprising at least one of: a temperature sensor (e.g. a thermocouple or other thermometer); and a humidity sensor. The trap may be configured to transmit recorded condition data such as temperature and/or humidity data (e.g. to the portable electronic device or other remote device). The condition sensor may be configured to measure the condition of the bait directly and/or the environment around the bait (e.g. the humidity within the chamber of a box trap).

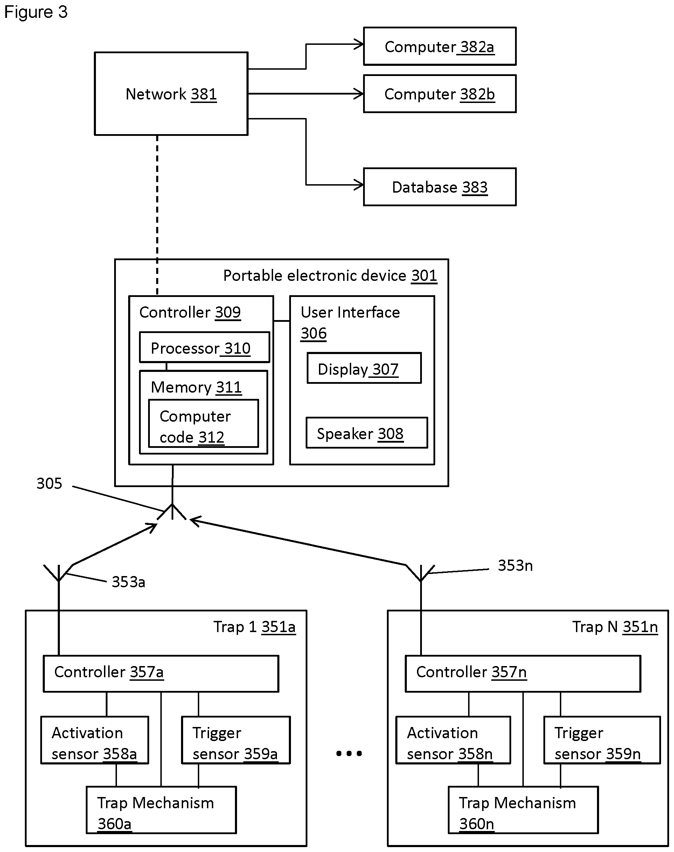

Figure 3 is a schematic showing the components of a pest control system and how they interact.

In this case, the pest control system comprises a portable electronic device 301; a number of rodent traps 351a-n; a network 381; computers 382a-b; and a database 383.

The traps, in this case, comprise a trap mechanism 360a-n (e.g. a jaw trap mechanism, a spring-loaded bar mechanism) configured to trap a rodent by capturing or killing it. In this case, the trap mechanism 360a-n is configured to be activated in response to receiving a signal from the trap controller (which may comprise a processor, a memory and computer program code). The trap controller, in this case, is configured to activate the trap mechanism in response to receiving a trigger signal from the trigger sensor (e.g. an IR sensor or a vibration sensor). The trigger sensor is configured to detect the presence of a rodent in the trap. It will be appreciated that other traps may have a mechanical trigger rather than a trigger sensor 359a-n.

In this case, the trap comprises a separate activation sensor 358a-n (e.g. a micro switch) configured to sense when the trap mechanism has been activated. It will be appreciated that, as described in a previous embodiment, the trigger sensor may be the same as the activation sensor. In response to receiving an activation signal from the activation sensor, the trap controller is configured to enable transmission of local wireless communication signaling indicating that the trap has been activated. The transmission is facilitated by the trap having a transmitter 353a-n.

It will be appreciated that the controller 357a-n, the activation sensor 358a-n, the trigger sensor 359a-n and the transmitter in each trap 351a-n may form part of an activation-detection module which may be retrofit to the trap mechanism 360a-n.

In this case, the portable electronic device 301 comprises a device controller 309 which includes a processor 310 (e.g. an ASIC), and memory 311 having computer program code 312 which, when run on the processor, controls the function of the portable electronic device. In this case, the portable electronic device also comprises a receiver 305 configured to receive local wireless communication signals from traps within range. The received local wireless communication signals are processed by the controller 309.

The device controller is configured to process the received local wireless communication signals in order to identify the trap which transmitted the signals. The device controller may also be configured to determine a time associated with the trap activation.

The portable electronic device further comprises a user interface 306 which, in this case, comprises a display 307 and a speaker 308 in order to enable the provision of an indication to the user of one or more activated trap. It will be appreciated that other embodiments may have different user interface components.

The portable electronic device 301, in this case, is also configured to enable connection with a network 381 (e.g. the internet) to facilitate transfer of data from the portable electronic device to the network. This may allow data associated with the rodent trap system to be stored on a computer 382a-b or in a database 383. It will be appreciated that other embodiments may facilitate direct communication with an external computer or database.

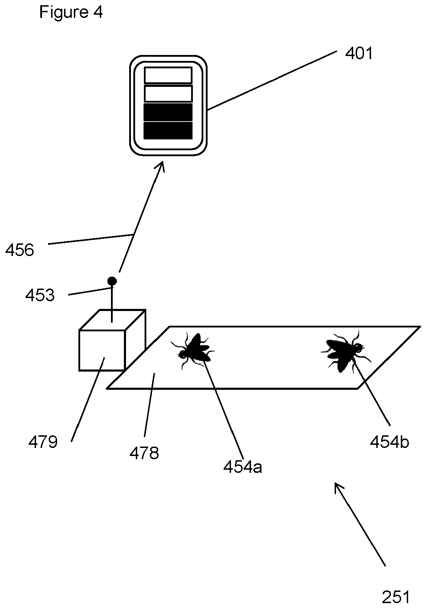

Figure 4 is a schematic showing an insect pest trap interacting with a portable electronic device.

In this case, the pest trap comprises:
an adhesive surface 478 configured to immobilize one or more pests (insects 454a,b in this case);
a sensor configured 479 to detect the presence of one or more pests on the adhesive surface, the sensor configured to transmit data corresponding the detected presence of one or more pests to a controller (not shown); and
a transmitter 453, the transmitter being connected to the controller and configured to transmit data to a remote electronic device 401.

In this case, the pest trap 451 is configured to immobilize the insects 454a,b by the insects being stuck to the adhesive strip 478. It will be appreciated that the adhesive strip may comprise bait to attract the pests to the adhesive strip.

The trap 451 in this case comprises an activation sensor which, in this case, is a vibration sensor configured to detect the vibration of the insects on the adhesive. When the activation sensor is activated the trap is configured to broadcast local wireless communication signals via a transmitter 453. It will be appreciated that other embodiments may use other sensors such as IR sensors to detect the presence of pests.

In this embodiment, the portable electronic device 401 is configured to receive local wireless communications 456 signaling from traps within range which have been activated. In this case, the portable electronic device 401 is configured to identify the at least one of the multiple traps in range based on the angle of incidence of the local wireless communication signals.

In this case the portable electronic device 401 provides the information to the user visually in the form of a bar which gives an indication of the strength of the vibrations which can be correlated to the size and/or mass of the trapped insects. This allows the user to determine whether the adhesive strip needs to be replaced.

In addition, in this case, the traps are configured generate activation time information associated with the activated traps. This activation time information may be useful in determining a strategy for placing and/or inspecting the traps within a facility. In this case the portable electronic is configured to enable provision of data to an external electronic device, the data comprising information on which of the multiple traps had been activated. The provision of data may be enabled by transmitting information wirelessly (e.g. via Wi-Fi, Bluetooth®) and/or by storing information locally on the portable electronic device for later retrieval (using, for example, a USB stick, or a wired or wireless connection).

It will be appreciated that the trap 251 may comprise a replaceable trap mechanism (e.g. the adhesive strip) and a retrofitable activation-detection module comprising:
a connector, the connector configured to connect the activation-detection module to the pest control trap;
a sensor, the sensor connected to a controller and configured to sense when the pest control trap has been activated; and
a transmitter, the transmitter connected to the controller and configured to transmit data relating to the activation of the pest control trap.

This may allow the activation detection module to be reused when the adhesive strip is exhausted. In this case, the connector may simply be a portion of the housing which connects to the adhesive strip to allow vibrations to pass between the adhesive strip and the vibration sensor.

Although the present invention has been described and illustrated with respect to preferred embodiments and preferred uses thereof, it is not to be so limited since modifications and changes can be made therein. The scope of the invention is defined by the claims.

## Claims

1. A rodent trapping system comprising:
multiple rodent traps (251a-j), each of the rodent traps being configured:
to activate in order to detect, kill or trap a rodent; and
transmit local wireless communications signals to a portable electronic device;
and
a portable electronic device (201, 301) comprising a receiver (305) to receive local wireless communications signals (256a,b,d) from the rodent traps within a range (251 a-d),
wherein the portable electronic device comprises a controller (309) having a processor (310) and memory (311), the controller being configured, in response to receiving the local wireless communications signals, to identify at least one of the multiple traps in range which have been activated; the rodent trapping system being **characterized in that** the portable electronic device is configured, based on the received local wireless communications signals, to determine the relative location of at least one of the identified activated traps and to provide an indication (257a, b, d) to the user (281) of the determined relative location, the determined relative location comprising information relating to one or more of: the proximity of the trap to the portable electronic device; and the direction of the trap relative to the portable electronic device.

2. The rodent trapping system of claim 1, wherein the portable electronic device (201, 301) is configured, in response to the received local wireless communications signals, to determine and identify one or more traps in range (251c) which have not been activated.

3. The rodent trapping system of any preceding claim, wherein the portable electronic device (201, 301) is configured to provide a broadcast signal to any rodent traps within the range in order to prompt transmission of the local wireless communications signals from the rodent traps within range.

4. The rodent trapping system device of any preceding claim, wherein the portable electronic device is configured, based on the received local wireless communications signals, to record a time associated with an activation event of an activated trap.

5. The rodent trapping system of any preceding claim, wherein the portable electronic device is configured to enable provision of data to an external electronic device (382a-b, 383), the data comprising information on which of the multiple traps had been activated.

6. The rodent trapping system of any preceding claim, wherein the portable electronic device comprises phased-array antenna configured to measure the angle of incidence of the incoming local wireless communications signaling for each of the activated traps to thereby determine the direction of the trap relative to the portable electronic device.

7. The rodent trapping system of any preceding claim, wherein the portable electronic device is to determine the proximity of the trap by measuring the signal strength of the corresponding local wireless communication signals.

8. The rodent trapping system of any preceding claim, wherein each of the rodent traps comprises an activation sensor (358a-n), configured to determine when the rodent trap has been activated and a separate trigger sensor (359a-n) configured to detect the presence of a rodent in the trap.

9. The rodent trapping system of any preceding claim, wherein at least one of the rodent traps comprises a condition sensor, the condition sensor comprising at least one of a temperature sensor and a humidity sensor, and wherein the rodent trapping system is configured to:
record condition data; and
provide an indication that the recorded temperature and/or humidity satisfies one or more criteria corresponding to a likelihood that the bait has gone off.

10. The rodent trapping system of claim 9, wherein a said trap comprises a conditioning unit comprising one or more of: a humidifier; a dehumidifier; a heater and a cooler, and wherein the conditioning unit is controlled by a controller in response to the recorded condition data.

11. The rodent trapping system of any preceding claim, wherein at least one of the rodent traps is configured to monitor the mass of bait remaining.

12. The rodent trapping system of any preceding claim, wherein at least one of the rodent traps is configured to determine a measure of the size of the pest.

13. The rodent trapping system of any preceding claim, wherein the portable electronic device is configured to provide visually relative location information in the form of one or more arrow indications (257a, b, d), each arrow indication indicating the location of an activated trap relative to the portable electronic device.

14. A method, the method comprising:
receiving, by a portable electronic device (201, 301), local wireless communications signals (256a, b, d) from multiple rodent traps (251a, b, d) within a range (221), the rodent traps being configured to activate in order to trap, kill, or detect a rodent; and
using the portable electronic device (201, 301), in response to the received local wireless communications signals:
identifying at least one of the multiple traps in range which have been activated;
determining the relative location of at least one of the identified activated traps;
providing an indication to a user of the at least one identified activated traps; and
providing an indication to the user of the determined relative location, the determined relative location comprising information relating to one or more of: the proximity of the trap to the portable electronic device; the direction of the trap relative to the portable electronic device.

15. A computer program (312), the computer comprising instructions to cause the portable electronic device of the system of claim 1 to execute the steps of the method of claim 14.

## Patentansprüche

1. Nagetierfallensystem, aufweisend:
mehrere Nagetierfallen (251a-j), wobei jede der Nagetierfallen so konfiguriert ist, dass sie aktiviert werden, um ein Nagetier zu erfassen, zu töten oder zu fangen; und
um lokale Drahtloskommunikationssignale an eine tragbare elektronische Vorrichtung zu übertragen; und
eine tragbare elektronische Vorrichtung (201, 301), aufweisend einen Empfänger (305), um lokale Drahtloskommunikationssignale (256a, b, d) von den Nagetierfallen innerhalb einer Reichweite (251a-d) zu empfangen,
wobei die tragbare elektronische Vorrichtung einen Controller (309) mit einem Prozessor (310) und einem Speicher (311) aufweist, wobei der Controller so konfiguriert ist, dass er als Reaktion auf das Empfangen der lokalen Drahtloskommunikationssignale zumindest eine der mehreren Fallen in Reichweite identifiziert, die aktiviert wurden; wobei das Nagetierfallensystem **dadurch gekennzeichnet ist, dass** die tragbare elektronische Vorrichtung auf Basis der empfangenen lokalen Drahtloskommunikationssignale so konfiguriert ist, dass sie den relativen Ort zumindest einer der identifizierten aktivierten Fallen bestimmt und eine Anzeige (257a, b, d) des bestimmten relativen Orts für den Benutzer (281) bereitstellt, wobei der bestimmte relative Ort Informationen aufweist, die sich auf eines oder mehrere der Folgenden beziehen: die Nähe der Falle zu der tragbaren elektronischen Vorrichtung, und die Richtung der Falle relativ zu der tragbaren elektronischen Vorrichtung.

2. Nagetierfallensystem nach Anspruch 1, wobei die tragbare elektronische Vorrichtung (201, 301) so konfiguriert ist, dass sie als Reaktion auf die empfangenen lokalen Drahtloskommunikationssignale eine oder mehrere Fallen in Reichweite (251c) bestimmt und identifiziert, die nicht aktiviert wurden.

3. Nagetierfallensystem nach einem der vorgenannten Ansprüche, wobei die tragbare elektronische Vorrichtung (201, 301) so konfiguriert ist, dass sie jeglichen Nagetierfallen in Reichweite ein Sendesignal bereitstellt, um eine Übertragung der lokalen Drahtloskommunikationssignale von den Nagetierfallen in Reichweite auszulösen.

4. Nagetierfallensystem nach einem der vorgenannten Ansprüche, wobei die tragbare elektronische Vorrichtung so konfiguriert ist, dass sie auf Basis der empfangenen lokalen Drahtloskommunikationssignale eine Zeit aufzeichnet, die einem Aktivierungsereignis einer aktivierten Falle zugeordnet ist.

5. Nagetierfallensystem nach einem der vorgenannten Ansprüche, wobei die tragbare elektronische Vorrichtung so konfiguriert ist, dass sie ein Bereitstellen von Daten an eine externe elektronische Vorrichtung (382a-b, 383) ermöglicht, wobei die Daten Informationen darüber aufweisen, welche der mehreren Fallen aktiviert wurde.

6. Nagetierfallensystem nach einem der vorgenannten Ansprüche, wobei die tragbare elektronische Vorrichtung eine phasengesteuerte Antenne aufweist, die so konfiguriert ist, dass sie den Einfallswinkel der hereinkommenden lokalen Drahtloskommunikationssignale für jede der aktivierten Fallen misst, um dadurch die Richtung der Falle relativ zu der tragbaren elektronischen Vorrichtung zu bestimmen.

7. Nagetierfallensystem nach einem der vorgenannten Ansprüche, wobei die tragbare elektronische Vorrichtung dazu dient, die Nähe der Falle durch Messen der Signalstärke der entsprechenden lokalen Drahtloskommunikationssignale zu bestimmen.

8. Nagetierfallensystem nach einem der vorgenannten Ansprüche, wobei jede der Nagetierfallen einen Aktivierungssensor (358a-n), der so konfiguriert ist, dass er bestimmt, wann die Nagetierfalle aktiviert wurde, und einen separaten Auslösesensor (359a-n), der so konfiguriert ist, dass er die Präsenz eines Nagetiers in der Falle erfasst, aufweist.

9. Nagetierfallensystem nach einem der vorgenannten Ansprüche, wobei zumindest eine der Nagetierfallen einen Zustandssensor aufweist, wobei der Zustandssensor zumindest eines von einem Temperatursensor und einem Feuchtigkeitssensor aufweist, und wobei das Nagetierfallensystem so konfiguriert ist, dass es:
Zustandsdaten aufzeichnet; und
eine Angabe bereitstellt, dass die aufgezeichnete Temperatur und/oder Feuchtigkeit eines oder mehrere Kriterien erfüllt, die einer Wahrscheinlichkeit entsprechen, dass der Köder aufgenommen wurde.

10. Nagetierfallensystem nach Anspruch 9, wobei die Falle eine Konditioniereinheit aufweist, die eines oder mehrere der Folgenden aufweist: einen Befeuchter, einen Entfeuchter; eine Heizung und eine Kühlung, und wobei die Konditioniereinheit als Reaktion auf die aufgezeichneten Zustandsdaten durch einen Controller gesteuert wird.

11. Nagetierfallensystem nach einem der vorgenannten Ansprüche, wobei zumindest eine der Nagetierfallen so konfiguriert ist, dass sie die Masse des verbleibenden Köders überwacht.

12. Nagetierfallensystem nach einem der vorgenannten Ansprüche, wobei zumindest eine der Nagetierfallen so konfiguriert ist, dass sie ein Maß der Größe des Schädlings bestimmt.

13. Nagetierfallensystem nach einem der vorgenannten Ansprüche, wobei die tragbare elektronische Vorrichtung so konfiguriert ist, dass sie visuell relative Ortsinformationen in der Form einer oder mehrerer Pfeilanzeigen (257a, b, d) bereitstellt, wobei jede Pfeilanzeige den Ort einer aktivierten Falle relativ zu der tragbaren elektronischen Vorrichtung anzeigt.

14. Verfahren, wobei das Verfahren aufweist:
Empfangen, durch eine tragbare elektronische Vorrichtung (201, 301), lokaler Drahtloskommunikationssignale (256a, b, d) von mehreren Nagetierfallen (251a, b, d) innerhalb einer Reichweite (221), wobei die Nagetierfallen so konfiguriert sind, dass sie aktiviert werden, um ein Nagetier zu fangen, zu töten oder zu erfassen; und Verwenden der tragbaren elektronischen Vorrichtung (201, 301) als Reaktion auf die empfangenen lokalen Drahtloskommunikationssignale:
Identifizieren zumindest einer der mehreren Fallen in Reichweite, die aktiviert wurden;
Bestimmen des relativen Orts von zumindest einer der identifizierten aktivierten Fallen;
Bereitstellen einer Anzeige der zumindest einen aktivierten Falle für einen Benutzer; und
Bereitstellen einer Anzeige des bestimmten relativen Orts, des bestimmten relativen Orts einschließlich von Informationen, die sich auf eines oder mehrere der Folgenden beziehen: die Nähe der Falle zu der tragbaren elektronischen Vorrichtung; die Richtung der Falle relativ zu der tragbaren elektronischen Vorrichtung, für den Benutzer.

15. Computerprogramm (312), wobei der Computer Befehle aufweist, um die tragbare elektronische Vorrichtung des Systems nach Anspruch 1 zu veranlassen, die Schritte des Verfahrens nach Anspruch 14 auszuführen.

## Revendications

1. Système de piégeage de rongeurs comprenant :
de multiples pièges à rongeurs (251a-j), chacun des pièges à rongeurs étant configuré pour :
s'activer afin de détecter, tuer ou piéger un rongeur ; et
transmettre des signaux de communication sans fil locaux à un dispositif électronique portable ; et
un dispositif électronique portable (201, 301) comprenant un récepteur (305) pour recevoir des signaux de communication sans fil locaux (256a, b, d) à partir des pièges à rongeurs à portée (251a-d),
dans lequel le dispositif électronique portable comprend un dispositif de commande (309) ayant un processeur (310) et une mémoire (311), le dispositif de commande étant configuré, en réponse à la réception des signaux de communication sans fil locaux, pour identifier au moins un des multiples pièges à portée qui ont été activés ; le système de piégeage de rongeurs étant **caractérisé en ce que** le dispositif électronique portable est configuré, sur la base des signaux de communication sans fil locaux reçus, pour déterminer l'emplacement relatif d'au moins un des pièges activés identifiés et pour fournir une indication (257a, b, d) à l'utilisateur (281) de l'emplacement relatif déterminé, l'emplacement relatif déterminé comprenant des informations concernant un ou plusieurs parmi : la proximité du piège par rapport au dispositif électronique portable ; et la direction du piège par rapport au dispositif électronique portable.

2. Système de piégeage de rongeurs selon la revendication 1, dans lequel le dispositif électronique portable (201, 301) est configuré, en réponse aux signaux de communication sans fil locaux reçus, pour déterminer et identifier un ou plusieurs pièges à portée (251c) qui n'ont pas été activés.

3. Système de piégeage de rongeurs selon l'une quelconque des revendications précédentes, dans lequel le dispositif électronique portable (201, 301) est configuré pour fournir un signal de diffusion à tout piège à rongeurs à portée afin d'inciter la transmission des signaux de communication sans fil locaux à partir des pièges à rongeurs à portée.

4. Dispositif de système de piégeage de rongeurs selon l'une quelconque des revendications précédentes, dans lequel le dispositif électronique portable est configuré, sur la base des signaux de communication sans fil locaux reçus, pour enregistrer un temps associé à un événement d'activation d'un piège activé.

5. Système de piégeage de rongeurs selon l'une quelconque des revendications précédentes, dans lequel le dispositif électronique portable est configuré pour permettre la mise à disposition de données à un dispositif électronique externe (382a-b, 383), les données comprenant des informations sur lesquelles les multiples pièges ont été activés.

6. Système de piégeage de rongeurs selon l'une quelconque des revendications précédentes, dans lequel le dispositif électronique portable comprend une antenne réseau à commande de phase configurée pour mesurer l'angle d'incidence de la signalisation de communication sans fil locale entrante pour chacun des pièges activés pour déterminer ainsi la direction du piège par rapport au dispositif électronique portable.

7. Système de piégeage de rongeurs selon l'une quelconque des revendications précédentes, dans lequel le dispositif électronique portable est destiné à déterminer la proximité du piège en mesurant la force du signal des signaux de communication sans fil locale correspondants.

8. Système de piégeage de rongeurs selon l'une quelconque des revendications précédentes, dans lequel chacun des pièges à rongeurs comprend un capteur d'activation (358a-n), configuré pour déterminer quand le piège à rongeurs a été activé, et un capteur de déclenchement séparé (359a-n) configuré pour détecter la présence d'un rongeur dans le piège.

9. Système de piégeage de rongeurs selon l'une quelconque des revendications précédentes, dans lequel au moins un des pièges à rongeurs comprend un capteur de condition, le capteur de condition comprenant au moins un parmi un capteur de température et un capteur d'humidité, et dans lequel le système de piégeage de rongeurs est configuré pour :
enregistrer des données de condition ; et
fournir une indication que la température et/ou l'humidité enregistrées satisfont à un ou plusieurs critères correspondant à une probabilité que l'appât soit parti.

10. Système de piégeage de rongeurs selon la revendication 9, dans lequel ledit piège comprend une unité de conditionnement comprenant un ou plusieurs parmi : un humidificateur ; un déshumidificateur ; un élément chauffant et un refroidisseur, et dans lequel l'unité de conditionnement est commandée par un dispositif de commande en réponse aux données de conditions enregistrées.

11. Système de piégeage de rongeurs selon l'une quelconque des revendications précédentes, dans lequel au moins un des pièges à rongeurs est configuré pour surveiller la masse d'appât restant.

12. Système de piégeage de rongeurs selon l'une quelconque des revendications précédentes, dans lequel au moins un des pièges à rongeurs est configuré pour déterminer une mesure de la taille du parasite.

13. Système de piégeage de rongeurs selon l'une quelconque des revendications précédentes, dans lequel le dispositif électronique portable est configuré pour fournir visuellement des informations d'emplacement relatif sous la forme d'une ou plusieurs indications de flèches (257a, b, d), chaque indication de flèche indiquant l'emplacement d'un piège activé par rapport au dispositif électronique portable.

14. Procédé, le procédé comprenant :
la réception, par un dispositif électronique portable (201, 301), de signaux de communication sans fil locaux (256a, b, d) à partir de multiples pièges à rongeurs (251a, b, d) à portée (221), les pièges à rongeurs étant configurés pour s'activer afin de piéger, tuer ou détecter un rongeur ; et
en utilisant le dispositif électronique portable (201, 301), en réponse aux signaux de communication sans fil locaux reçus :
l'identification d'au moins un des multiples pièges à portée qui ont été activés ;
la détermination de l'emplacement relatif d'au moins un des pièges activés identifiés ;
la fourniture d'une indication à un utilisateur de l'au moins un piège activé identifié ; et
la fourniture d'une indication à l'utilisateur de l'emplacement relatif déterminé, l'emplacement relatif déterminé comprenant des informations concernant une ou plusieurs parmi : la proximité du piège par rapport au dispositif électronique portable ; la direction du piège par rapport au dispositif électronique portable.

15. Programme informatique (312), l'ordinateur comprenant des instructions pour amener le dispositif électronique portable du système selon la revendication 1 à exécuter les étapes du procédé selon la revendication 14.
